# EUROPÄISCHE PATENTANMELDUNG

(11) **EP 1 160 040 A1**
(43) Veröffentlichungstag der Anmeldung: **05.12.2001**
(21) Anmeldenummer: 01111733.0
(22) Anmeldetag: 15.05.2001
(51) Int. Cl.: B23D 43/02, B23F 21/26

(54) **Innen-Räumwerkzeug**

(30) Priorität: 02.06.2000 DE 10027528
(71) Anmelder: Oswald Forst Maschinenfabrik und Apparatebauanstalt GmbH & Co Kommanditgesellschaft, 42659 Solingen (DE)
(72) Erfinder: Melcher, Reinhard, 42655 Solingen (DE)
(74) Vertreter: Rau, Manfred, Dr. Dipl.-Ing.

(57) **Zusammenfassung**

Ein Innen-Räumwerkzeug Innen-Räumwerkzeug zum Innen-Räumen von jeweils durch einen Profilgrund (10) und Profilflanken (11, 12) begrenzten Profilen von Innenverzahnungen eines Werkstückes (5) weist einen Zahnungsteil mit mehreren entgegen einer Räumrichtung hintereinander angeordneten Reihen von Räumzähnen (17d) auf, wobei jeweils hintereinander angeordnete Räumzähne (17d) zum Räumen eines Profils mit einer Profiltiefe g einander zugeordnet sind. Die Räumzähne (17d) weisen Profilgrund-Schneiden (19d) und Seitenflächen (21d, 22d) mit Profilflanken-Schneiden auf. Die Profilflanken-Schneiden sind als sich an die Profilgrund-Schneiden (19d) anschließend Teil-Profilflanken-Schneiden (23d, 24d) ausgebildet, deren Höhe f erheblich kleiner ist als die Profiltiefe g und erheblich größer als eine Durchmesser-Steigung h. Die Teil-Profilflanken-Schneiden (23d, 24d) sind mit Flanken-Freiflächen versehen. Die Seitenflächen (21d, 22d) sind anschließend an die Teil-Profilflanken-Schneiden (23d, 24d) als freigelegte Flächen (25d, 26d) ausgebildet.

## Beschreibung

Die Erfindung betrifft ein Innen-Räumwerkzeug zum Innen-Räumen von jeweils durch einen Profilgrund und Profilflanken begrenzten Profilen, insbesondere von Innenverzahnungen, in einem Werkstück gemäß dem Oberbegriff des Anspruchs 1.

Die zum Innen-Räumen von Profilen üblicherweise eingesetzten Innen-Räumwerkzeuge sind aus DIN 1415 (Ausgabe 1973), Blatt 1, Seite 2 bekannt. Sie weisen einen Schaft, einen Zahnungsteil und ein Endstück auf. Der Schaft wird von einem Schafthalter einer Räummaschine gehalten, welcher das Räumwerkzeug durch ein in der Räummaschine gehaltenes Werkstück zieht und hierbei die Profile räumt. Das Endstück wird nach dem Räumvorgang von einem Endstückhalter der Räummaschine ergriffen, der das Räumwerkzeug nach dem Räumvorgang in seine Ausgangsposition zurücktransportiert. Der Zahnungsteil weist entgegen der Räumrichtung hintereinander mehrere Reihen von Räumzähnen auf, und zwar in der Regel eine große Zahl solcher Reihen von Räumzähnen. Die Räumzähne weisen Profilgrund-Schneiden zum Schneiden des Profilgrundes eines Profils und Profilflanken-Schneiden zum Schneiden der Profilflanken des Profils auf. Die zum Schneiden eines Profils dienenden, entgegen der Räumrichtung hintereinander angeordneten und insoweit einander zugeordneten Räumzähne weisen eine Tiefenstaffelung, d. h. eine Durchmessersteigung auf, so daß alle zum Schneiden eines Profils dienenden Räumzähne nacheinander einen zur Erzeugung des Profilgrundes dienenden Span schneiden.

Da die Profilgrund-Schneiden die Hauptspanungsleistung erbringen, werden sie auch als Hauptschneiden bezeichnet. Soweit es um das Schneiden der Profilflanken des Profils geht, weisen die entgegen der Räumrichtung hintereinander angeordneten Räumzähne Profilflanken-Schneiden mit einem Profilgefälle auf, wie es in DIN 1415 (Ausgabe 1973), Blatt 1, Seite 3, Bild 11 dargestellt ist. Die Profilflanken-Schneiden werden auch als Nebenschneiden bezeichnet. Das Profilgefälle wird dadurch erzeugt, daß die Profilflanken-Schneiden eines nachfolgenden Räumzahns bezogen auf die Profilflanken-Schneiden eines voreilenden Räumzahns mit einer seitlichen Freilage versehen werden, so daß der nachfolgende Räumzahn nur in dem durch die Durchmessersteigung bzw. Tiefenstaffelung vorgesehenen Bereich mit seinen Profilflanken-Schneiden schneidet, während er in dem Bereich, in dem der voreilende Räumzahn mit seinen Profilflanken-Schneiden geschnitten hat, nicht zum Eingriff am Werkstück kommt. Hierdurch wird ein Klemmen der Räumzähne im Bereich der Profilflanken während des Räumvorganges verhindert. Die Profilflanken erhalten hierdurch eine treppenförmige Oberflächenstruktur.

Die mit dem bekannten und üblichen Innenräumwerkzeug erzeugten Profile weisen für normale Anwendungs- bzw. Bedarfsfälle eine ausreichende Oberflächengüte, Profilformgenauigkeit und Profilliniengenauigkeit auf. Während des Räumvorganges kann eine Verlagerung der Achse des Räumwerkzeuges stattfinden, so daß die nacheinander zum Eingriff kommenden Räumzähne jeweils eine unterschiedliche Mittenlage relativ zum zu räumenden Werkstück haben. Insbesondere beim Drallräumen (Schraubräumen) kann einer solchen Verlagerung der Achse des Räumwerkzeuges ein Torsionsfehler überlagert werden, welcher durch rotatorische Kräfte beim Drallräumen hervorgerufen wird. Die Profilformgenauigkeit und die Oberflächengüte der Profilflanken sind hierbei oft nicht ausreichend, wenngleich die Flankenliniengenauigkeit in der Regel zufriedenstellend ist. Insbesondere bei Laufverzahnungen, z. B. innenverzahnten Zahnrädern mit einer Gerad- oder Schräg-Verzahnung, werden hohe Profilformgenauigkeiten und Flankenliniengenauigkeiten gefordert.

Um die geschilderten Mängel bei entsprechend hohen Anforderungen zu beseitigen, ist es bekannt, den mit Profilgefälle ausgestatteten Räumzähnen - bezogen auf die Räumrichtung - am Räumwerkzeug noch einen Kalibrierbereich nachzuordnen. Ein solcher Kalibrierbereich besteht aus mehreren hintereinander angeordneten ' Räumzähnen gleicher Höhe, die also den Profilgrund nicht nachschneiden. Sie weisen jedoch entgegen der Räumrichtung größer werdende Zahndicken auf, d. h. alle Kalibrier-Räumzähne schneiden über die volle Flankenhöhe der Profilflanke einen Span, dessen Spandicke im allgemeinen 10 bis 20 µm beträgt. Die Kalibrier-Räumzähne müssen an jeder Profilflanken-Schneide mit einem Freischliff, d. h. einem Freiwinkel, versehen sein. Sie weisen also einen Hinterschliff auf. Durch das Kalibrierräumen wird eine gute Profilformgenauigkeit und eine hohe Oberflächengüte erreicht. Hinsichtlich der Flankenliniengenauigkeit tritt im Verhältnis zum zuvor in Tiefenstaffelung geräumten Profil eine Verschlechterung ein. Dies ergibt sich daraus, daß die hinterschliffenen Profilflanken-Schneiden der Kalibrierräumzähne scharfe Schneiden sind, deren Eigenführungsverhalten relativ schlecht ist.

Beim Wechsel von tiefengestaffelten Räumen zum Vollformkalibrieren tritt systembedingt eine Räumkraftunterbrechung auf, die insbesondere beim Drallräumen zu erheblichen Nachteilen führt. Hierbei führt eine Entlastung der entgegen der Räumrichtung wirkenden Hauptschnittkraft auch zu einer Reduktion der Torsionsspannung, d. h. die relative Torsion zwischen Werkstück und Innen-Räumwerkzeug verändert sich. Diese Veränderung kann so stark sein, daß der Vollformkalibrierschneidteil nicht richtig in die unter Tiefenstaffelung geräumten Profile eingeführt wird und deshalb derart einseitig die Profilflanken anschneidet, daß das Profil nicht an seinen beiden Profilflanken kalibriert wird. Aufgrund der geschilderten Mängel des beim tiefengestaffelten Räumen erzeugten Profils schneiden die Profilflanken-Schneiden der Kalibrier-Räumzähne ungleichmäßig in die treppenförmig ausgebildeten Profilflanken, wodurch wiederum Torsionsschwingungen entstehen, die sich negativ auf die Profilliniengenauigkeit auswirken können.

Aus der US 2 986 801 ist ein Innen-Räumwerkzeug zum Innenräumen von jeweils durch einen Profilgrund und Profilflanken begrenzten Innenverzahnungen in einem Werkstück bekannt. Die Profilgrund-Schneiden hintereinander angeordneter und einander zugeordneter Räumzähne weisen eine positive Durchmessersteigung gegenüber den in Räumrichtung jeweils voreilenden Räumzähnen auf. Die Profilflanken-Schneiden hintereinander angeordneter und einander zugeordneter Räumzähne weisen über ihre volle Profilhöhe eine negative Profilsteigung auf. Dies heißt, daß hintereinander angeordnete Räumzähne bei zunehmendem Durchmesser jeweils schmalere Profile aufweisen. Die sich daraus ergebenden Nachteile entsprechen den oben zu DIN 1415 (Ausgabe 1973) beschriebenen Nachteilen.

Aus der EP 0 739 674 A (entsprechend US-A-5,865,569) ist es zur Beseitigung der vorstehend geschilderten Nachteile bei einem Innen-Räumwerkzeug der gattungsgemäßen Art bekannt geworden, eine höhere Oberflächengüte, Profilformgenauigkeit und Flankenliniengenauigkeit dadurch zu erreichen, daß die Profilflanken-Schneiden hintereinander angeordneter und einander zugeordneter Räumzähne über ihre volle Profilhöhe eine Profilsteigung aufweisen, die bezogen auf die Durchmesser-Steigung der Profilgrund-Schneiden klein ist. Bei dieser bekannten, an sich außerordentlich vorteilhaften Ausgestaltung muß der Spankammer-Grund der Räumzähne auf jeden Fall unter dem Profilsteg, das heißt unter dem Kopfkreis des zu erzeugenden Profils liegen, da alle Profilflanken-Schneiden ihre untere Begrenzung am Profilsteg haben. Dies führt bei großen Höhen der zu erzeugenden Profile zu großen Zahn-Teilungen mit der Konsequenz, daß bei einer vorgegebenen Zahl von Räumzähnen das Räumwerkzeug zu lang wird. Wenn dagegen die Zahn-Teilung trotz einer zu großen Höhe des zu erzeugenden Profils klein gemacht wird, kann dies zu Problemen beim Schleifen führen. In bestimmten Größenbereichen der Profile wird daher die Nutzung der Vorteile der gattungsgemäßen Ausgestaltung eingeschränkt.

Der Erfindung liegt daher die Aufgabe zugrunde, ein Innen-Räumwerkzeug der gattungsgemäßen Art auszugestalten, daß bei Beibehaltung von dessen Vorteilen auch bei großen Höhen der zu erzeugenden Profile die erforderliche Zahn-Teilung klein gehalten werden kann.

Diese Aufgabe wird erfindungsgemäß durch die Merkmale im Kennzeichnungsteil des Anspruches 1 gelöst. Bei dem erfindungsgemäßen Innen-Räumwerkzeug wird die Hauptschnittleistung durch die Tiefenstaffelung der Räumzähne, also mit den Hauptschneiden, nämlich den Profilgrund-Schneiden, erbracht. Abweichend vom gattungsgemäßen Stand der Technik sind die Seitenflächen der Räumzähne nicht auf der vollen Höhe als Nebenschneiden mit Schabe-Effekt ausgeführt, sondern nur über einen Teil der Höhe des zu erzeugenden Profils als Teil-Profilflanken-Schneiden. Unterhalb dieser Teil-Profilflanken-Schneiden haben die Seitenflächen der Räumzähne keinen Kontakt mehr zu den Profilflanken des zuvor bereits erzeugten Profilbereiches des zu erzeugenden Profils der Innenverzahnung. Wegen des guten Eigenführungsverhaltens des Räumwerkzeuges wird eine gute Flankenliniengenauigkeit erreicht. Das gute Eigenführungsverhalten bewirkt ebenfalls eine gute Zentrierung während des Räumvorganges, wodurch ein Versatz der Achsen des Räumwerkzeuges und des Werkstückes vermieden wird. Dadurch und durch die geringe Profilsteigung der Teil-Profilflanken-Schneiden wird eine gute Profilform erreicht. Eine gute Oberfläche der geräumten Profilflanken wird dadurch erreicht, daß die Profilflanken durch die Nebenschneiden nachgeschabt werden. Ein Nacharbeiten ist in der Regel nicht notwendig.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: ein Innen-Räumwerkzeug,
- Fig. 2: ein mit Profilen in Form einer Innenverzahnung versehenes Werkstück,
- Fig. 3: einen Räumzahn im Eingriff in das Werkstück, wobei der Räumzahn in der Schnittebene III-III in Fig. 1 angeordnet ist,
- Fig. 4: einen Räumzahn im Eingriff in das Werkstück, wobei der Räumzahn in der Schnittebene IV-IV in Fig. 1 angeordnet ist,
- Fig. 5: einen Räumzahn im Eingriff in das Werkstück, wobei der Räumzahn in der Schnittebene V-V in Fig. 1 angeordnet ist,
- Fig. 6: einen Räumzahn im Eingriff in das Werkstück, wobei der Räumzahn in der Schnittebene VI-VI in Fig. 1 angeordnet ist,
- Fig. 7: einen Räumzahn im Eingriff in das Werkstück, wobei der Räumzahn in der Schnittebene VII-VII in Fig. 1 angeordnet ist und
- Fig. 8: eine Seitenansicht eines Räumzahnes, der etwa der Darstellung in Fig. 6 entspricht, mit einem nachfolgenden Räumzahn.

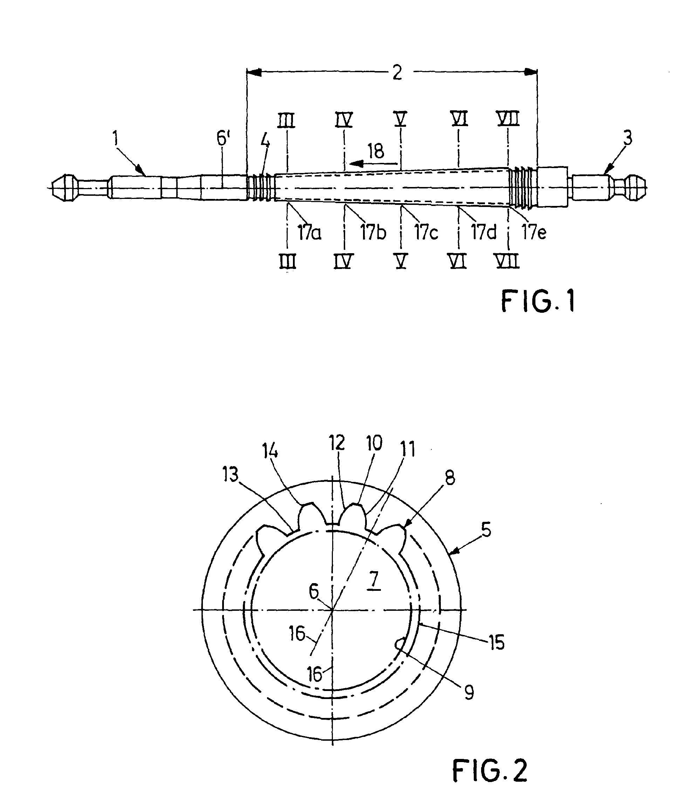

Das in Fig. 1 dargestellte und in seinem Aufbau bekannte Innen-Räumwerkzeug weist einen Schaft 1, einen Zahnungsteil 2 und hieran anschließend ein Endstück 3 auf. Auf dem Zahnungsteil 2 sind zahlreiche Reihen 4 von Räumzähnen angebracht. Mit dem Innen-Räumwerkzeug wird ein beispielsweise ringförmiges Werkstück 5 bearbeitet. Dieses weist bereits vor dem Räumen eine zur Mittel-Längs-Achse 6 des fertig bearbeiteten Werkstücks 5 konzentrische Bohrung 7 auf. Das Werkstück 5 wird auf eine Werkstückvorlage einer Innen-Räummaschine gelegt; anschließend wird der Schaft 1 des Räumwerkzeuges durch die Bohrung 7 geführt und von einem Schafthalter ergriffen, der in Richtung der Achse 6' des Räumwerkzeuges antreibbar ist und das Räumwerkzeug durch das Werkstück 5 zieht. Hierbei werden Profile 8, beispielsweise eine Innenverzahnung, in den Innenumfang 9 des Werkstücks 5 geräumt. Das Innen-Räumwerkzeug wird hierbei nicht zwangsgeführt; es tritt eine Eigenführung bzw. Eigenzentrierung zwischen Werkstück und Räumwerkzeug ein. Das Endstück 3 dient primär zum Rücktransport des Innen-Räumwerkzeugs nach einem Räum-hub.

Die zu räumenden Profile 8 weisen einen Profilgrund 10, zwei einander gegenüberliegende Profilflanken 11, 12 und einen Profilsteg 13 auf, der die einander benachbarten Profilflanken 11, 12 zweier einander benachbarter Profile 8 miteinander verbindet. Die Profilflanken 11, 12 eines Profils 8 bilden mit dem Profilgrund 10 eine Ecke 14. Beim Räumen der Profile 8 kann die Bohrung 7 zu einer durch die Profilstege 13 begrenzten Ausnehmung 15 aufgeweitet werden. Das Räumen des Werkstücks 5 im Bereich der zu erzeugenden Profilstege 13 wird nachfolgend nicht erläutert, da es für das Verständnis der Erfindung ohne Bedeutung ist. Es wird nachfolgend das Räumen eines Profils 8 beschrieben, das zwischen zwei Radien 16 durch die Achse 6 angeordnet ist, die jeweils an das Profil 8 anschließende Profilstege 13 halbieren.

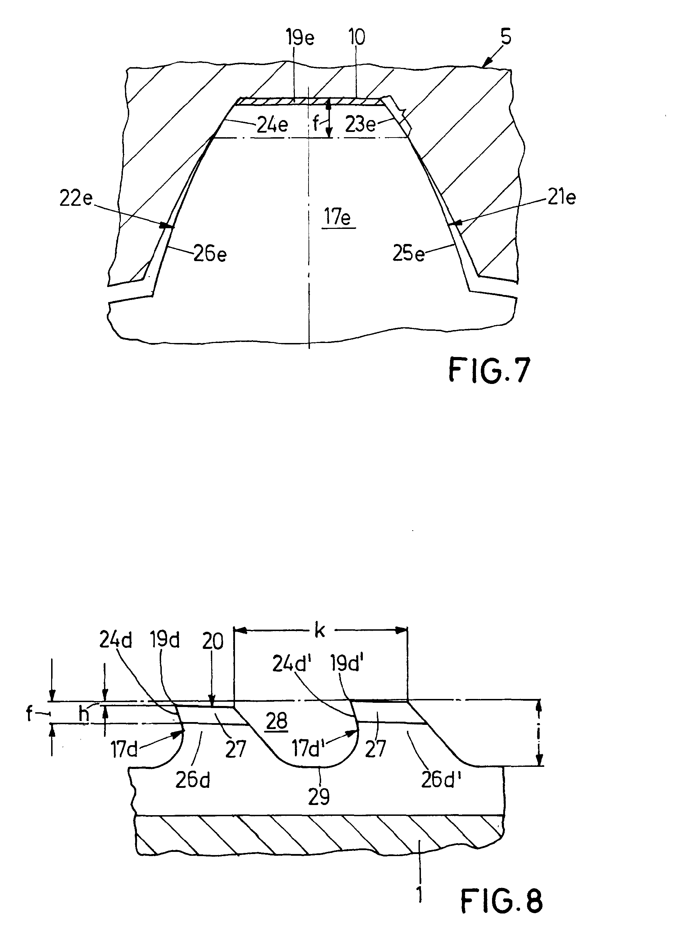

Eine erfindungsgemäße Ausgestaltung eines Innen-Räumwerkzeugs weist Räumzähne 17 auf, von denen ein erster Räumzahn mit 17a, weitere Räumzähne mit 17b, 17c, 17d und ein letzter Räumzahn mit 17e bezeichnet sind. Auch wenn insgesamt nur fünf Räumzähne dargestellt sind, sind an einem praxisgemäßen Räumwerkzeug mindestens - abhängig von der zu erzeugenden Profiltiefe - die fünf- bis zwanzigfache Zahl von Räumzähnen vorhanden. Die Räumzähne 17a bis 17e sind am Räumwerkzeug entgegen der Räumrichtung 18 angeordnet. Die Räumzähne 17a bis 17e weisen je-weils eine Profilgrund-Schneide 19a bis 19e auf, die einen Verlauf entsprechend einem zur Achse 6' konzentrischen Kreis aufweist, wobei ergänzt sei, daß die Achse 6' des Räumwerkzeugs und die Achse 6 des Werkstücks 5 grundsätzlich zusammenfallen sollen. Die Profilgrund-Schneiden 19a bis 19e sind in üblicher Weise mit einem Freischliff, d. h. einem Freiwinkel, versehen, sie weisen also eine Freifläche 20 auf, wie aus Fig. 8 ersichtlich ist.

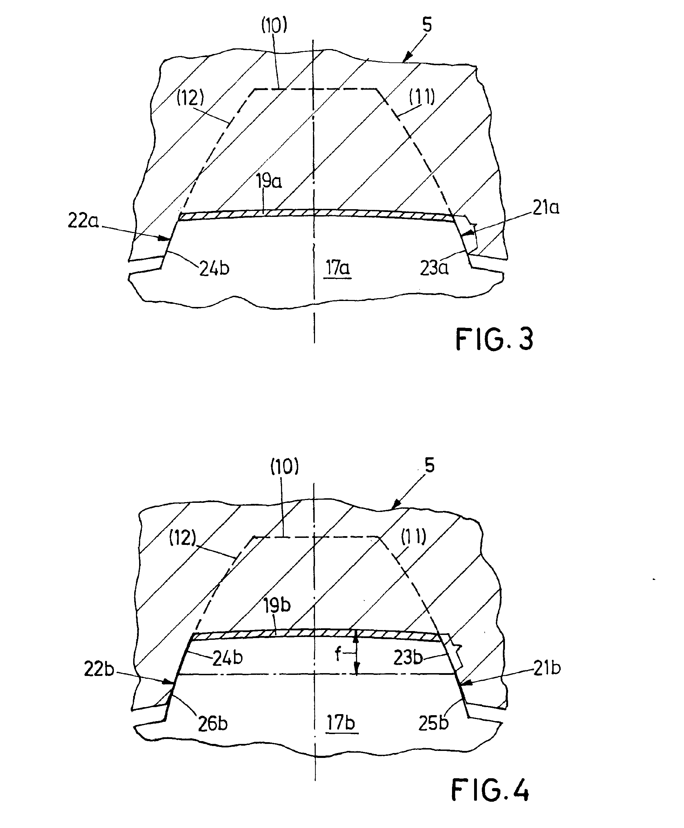

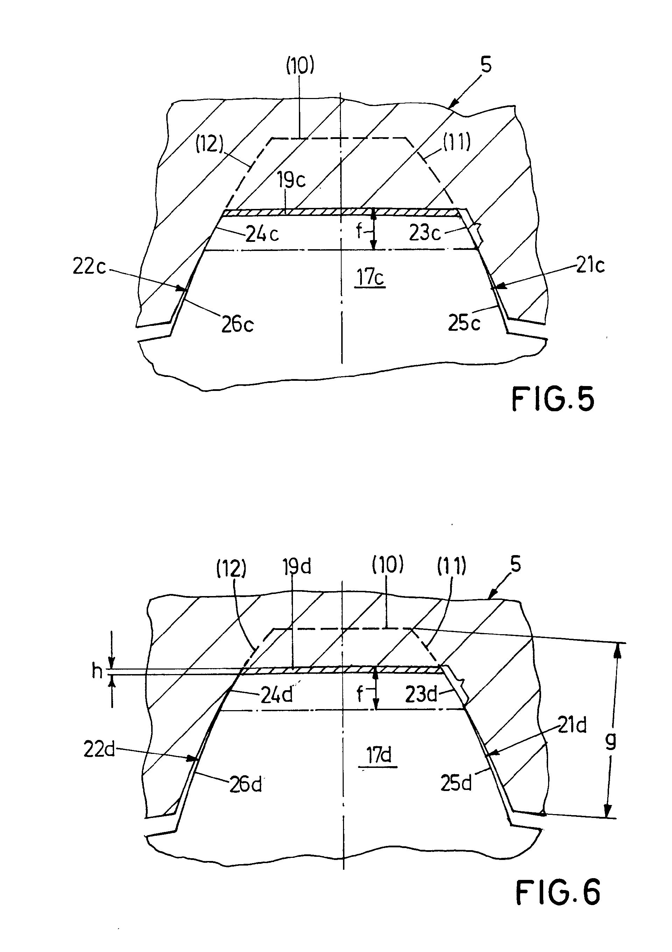

Die den zu erzeugenden Profilflanken 12, 13 zugeordneten Seitenflächen 21a bis 21e und 22a bis 22e weisen jeweils eine Teil-Profilflanken-Schneide 23a, 23b, 23c, 23d, 23e bzw. 24a, 24b, 24c, 24d, 24e auf, die sich mit den Profilgrund-Schneiden 19a bis 19e in Schneiden-Ecken 25a bis 25e bzw. 26a bis 26e schneiden. Nur diese Teil-Profilflanken-Schneiden 23a bis 23e und 24a bis 24e liegen jeweils auf der in den Fig. 3 bis 7 gestrichelt eingezeichneten Soll-Profilflanke 12 bzw. 13 des Profils 10. Im Anschluß an die Teil-Profilflanken-Schneiden 23a bis 23e und 24a bis 24e weisen die Seitenflächen 21b bis 21e bzw. 22b bis 22e freigelegte Flächen 25b, 25c, 25d, 25e bzw. 26b, 26c, 26d, 26e auf, das heißt, sie sind gegenüber den an sich zu erzeugenden Soll-Profilflanken 12, 13 frei gelegt; sie kommen also nicht in Eingriff mit dem Werkstück 5. Mit anderen Worten sind sie gegenüber in Räumrichtung 18 voreilenden Teil-Profilflanken-Schneiden 21a bis 21e und 22a bis 22e, die den zugeordneten Bereich der Profilflanke 11, 12 geräumt haben, zurückversetzt. Die Höhe f der Teil-Profilflanken-Schneiden 23a bis 24e ist - bezogen auf die Gesamt-Profiltiefe g des zu erzeugenden Profils 8 - jeweils in radialer Richtung zur Achse 6' klein. Es gilt 0,2g ≤ f ≤ 0,35g. In diesem Zusammenhang gilt, daß selbstverständlich im Bereich des Zahnungsteils 2 vor den Räumzähnen 17a die Profilflanken-Schneiden sich über die volle örtliche Profiltiefe erstrecken. Mit anderen Worten beginnt die geschilderte Ausgestaltung der Seitenflächen 21a bis 21e bzw. 22a bis 22e der Räumzähne 17a bis 17e erst dort, wo deren Höhe vom Profilgrund 14 her etwa das Maß f erreicht. In den ersten Räumzähnen erfolgt also ein Voll-Profilflanken-Schneiden, wie auch aus Fig. 3 hervorgeht. Wie aus den Fig. 3 bis 8 hervorgeht, ist die Profiltiefe f deutlich größer als die Spanungsdicke h, die sich aus der insoweit identischen Durchmesser-Steigung von einem Räumzahn zum unmittelbar nachfolgenden Räumzahn, beispielsweise vom Räumzahn 17d zum Räumzahn 17d', ergibt (Fig. 8). Die Teil-Profilflanken-Schneiden 23a bis 23e und 24a bis 24e überdecken einander bei den aufeinanderfolgenden Räumzähnen jeweils über eine größere Zahl von Räumzähnen, beispielsweise von 5 bis 20 Räumzähnen. Mit anderen Worten heißt dies: 5h ≤ f ≤ 20h.

Die Teil-Profilflanken-Schneiden 23a bis 24e sind frei geschliffen, das heißt sie weisen Flanken-Freiflächen 27 auf, wie Fig. 8 zu entnehmen ist. Die Teil-Profilflanken-Schneiden 23a bis 24e sind echte Nebenschneiden, das heißt, ihre in der Zeichnung nicht darstellbare Steigung von Räumzahn zu Räumzahn liegt im Bereich von 0 bis 2µm und bevorzugt im Bereich von 0 bis 1 µm, das heißt, sie ist um 1 bis 2 Zehnerpotenzen kleiner als die Spanungsdicke h, die im Bereich von 10 bis zu 80 µm liegt. Die Hauptfunktion der Teil-Profilflanken-Schneiden 23a bis 24e liegt also darin, daß Räumwerkzeug im Werkstück 5 zu führen. Darüber hinaus findet aufgrund der extrem geringen Dicke der von den Teil-Profilflanken-Schneiden geschnittenen Späne mehr ein Schaben als ein Schneiden statt.

Wie aus Fig. 8 hervorgeht, ist die Tiefe i der zwischen zwei benachbarten Räumzähnen, beispielsweise den Räumzähnen 17d und 17d', befindlichen Spankammer 28 nur relativ gering, wobei die Tiefe i zwischen der Profilgrund-Schneide 19d und dem Spankammer-Grund 29 gemessen wird. Dies ist darauf zurückzuführen, daß die Teil-Profilflanken-Schneiden 24d und 24d' nur eine relativ geringe Höhe f aufweisen. so daß die Teilung k, das heißt der Abstand zweier benachbarter Räumzähne 17d und 17d' in Richtung der Achse 6' voneinander relativ klein sein kann. Dies hat zur Konsequenz, daß pro Längeneinheit des Räumwerkzeuges mehr Reihen 4 von Räumzähnen 17 untergebracht werden können. Wenn - wie beim Voll-Profilflanken-Schneiden nach der EP 0 739 674 A (entsprechend US-A-5,865,569) - die Profilflanken-Schneiden am letzten Räumzahn sich über die volle Profiltiefe erstrecken, müssen die Spankammern 28 entsprechend tiefer ausgebildet sein und demzufolge einen entsprechend großen axialen Abstand voneinander haben.

In Fig. 8 sind auch die freigelegten Flächen 26d und 26d' zweier unmittelbar aufeinanderfolgender Räumzähne 17d und 17d' zu erkennen.

## Patentansprüche

1. Innen-Räumwerkzeug zum Innen-Räumen von jeweils durch einen Profilgrund (10) und Profilflanken (11, 12) begrenzten Profilen (8) von Innenverzahnungen eines Werkstückes (5),
- das einen Schaft (1) aufweist, der einer in Räumrichtung (18) voreilend ist, und
- das einen Zahnungsteil (2) mit mehreren entgegen der Räumrichtung (18) hintereinander angeordneten Reihen (4) von Räumzähnen (17a bis 17e) aufweist,
-- wobei jeweils hintereinander angeordnete Räumzähne (17a bis 17e) zum Räumen eines Profils (8) mit einer Profiltiefe g einander zugeordnet sind,
-- wobei die Räumzähne (17a bis 17e) Profilgrund-Schneiden (19a bis 19e) und Seitenflächen (21a bis 21e, 22a bis 22e) mit Profilflanken-Schneiden aufweisen,
-- wobei jeweils die Profilflanken-Schneiden die Profilgrund-Schneiden (19a bis 19e) durchdringen,
-- wobei die Profilgrund-Schneiden (19d, 19d') hintereinander angeordneter und einander zugeordneter Räumzähne (17d, 17d') eine Durchmesser-Steigung h gegenüber den in Räumrichtung (18) je-weils voreilenden Räumzähnen (17d) aufweisen, für die gilt: h > 0, und
-- wobei die Profilgrund-Schneiden (19a bis 19e) eine Freifläche (20) aufweisen,
**dadurch gekennzeichnet,**
**daß** mindestens ein überwiegender Teil der Profilflanken-Schneiden hintereinander angeordneter und einander zugeordneter Räumzähne (17a bis 17e) als sich an die Profilgrund-Schneiden (19a bis 19e) anschließende Teil-Profilflanken-Schneiden (23a bis 23e, 24a bis 24e) ausgebildet sind, deren Höhe f erheblich kleiner als die Profiltiefe g des Profils (8) und erheblich größer als die Durchmesser-Steigung h ist,
**daß** die Teil-Profilflanken-Schneiden (23a bis 23e, 24a bis 24e) mit Flanken-Freiflächen (27) versehen sind, und
**daß** die Seitenflächen (21b bis 21e, 22b bis 22e) der Räumzähne (17b bis 17e') anschließend an die Teil-Profilflanken-Schneiden (23b bis 23e, 24b bis 24e) als freigelegte Flächen (25b bis 25e, 26b bis 26e) ausgebildet sind.

2. Innen-Räumwerkzeug nach Anspruch 1, **dadurch gekennzeichnet,**
**daß** für die Höhe f im Vergleich zur Profiltiefe g gilt: 0,2g ≤ f ≤ 0,35g.

3. Innen-Räumwerkzeug nach Anspruch 1 oder 2, **dadurch gekennzeichnet,**
**daß** für die Höhe f im Vergleich zur Durchmesser-Steigung h gilt: 5h ≤ f ≤ 20h.

4. Innen-Räumwerkzeug nach einem der Ansprüche 1 bis 3, **dadurch gekennzeichnet,**
**daß** die Durchmesser-Steigung h und/oder die Profil-Steigung über die Länge des Räumwerkzeuges von Räumzahn zu Räumzahn variieren.
